# EUROPEAN PATENT SPECIFICATION

(11) **EP 2 472 865 B1**
(45) Date of publication and mention of the grant of the patent: **10.05.2017**
(21) Application number: 09846080.1
(22) Date of filing: 24.12.2009
(51) Int. Cl.: H04N 21/2343, H04N 7/24

(54) **METHOD AND SYSTEM FOR IMPLEMENTING VIDEO MONITORING BY MOBILE TERMINAL**
VERFAHREN UND SYSTEM ZUR IMPLEMENTIERUNG VON VIDEOÜBERWACHUNG MIT EINEM MOBILEN ENDGERÄT
PROCÉDÉ ET SYSTÈME DE MISE EN UVRE D UNE SURVEILLANCE VIDÉO PAR UN TERMINAL MOBILE

(30) Priority: 09.10.2009 CN 200910110631
(43) Date of publication of application: 04.07.2012
(73) Proprietor: ZTE Corporation, Shenzhen, Guangdong 518057 (CN)
(72) Inventor: HUO, Dongfeng, Shenzhen Guangdong 518057 (CN); HU, Changhui, Shenzhen Guangdong 518057 (CN); XIAO, Dan, Shenzhen Guangdong 518057 (CN); HE, Kai, Shenzhen Guangdong 518057 (CN)
(74) Representative: Price, Nigel John King
(86) International application number: PCT/CN2009/075993
(87) International publication number: WO 2010/145166

(56) References cited:
- CN-A- 101 031 071
- CN-A- 101 232 609
- CN-A- 101 442 726
- CN-A- 101 547 343
- CN-A- 101 547 343
- CN-A- 101 808 233
- JP-A- 2005 117 574
- US-A1- 2009 003 436
- ROY S ET AL: "A system architecture for managing mobile streaming media services", MULTIMEDIA SIGNAL PROCESSING, 2002 IEEE WORKSHOP ON 9-11 DEC. 2002, PISCATAWAY, NJ, USA,IEEE, 19 May 2003 (2003-05-19), pages 408-413, XP010642405, ISBN: 978-0-7803-7713-4
- TAKAYUKI WARABINO ET AL: "Video Transcoding Proxy for 3Gwireless Mobile Internet Access", IEEE COMMUNICATIONS MAGAZINE, IEEE SERVICE CENTER, PISCATAWAY, US, vol. 38, no. 10, 1 October 2000 (2000-10-01), pages 66-71, XP011091361, ISSN: 0163-6804
- ZHIJUN LEI ET AL: "Video transcoding gateway for wireless video access", 4 May 2003 (2003-05-04), PROCEEDINGS / CCECE 2003, CANADIAN CONFERENCE ON ELECTRICAL AND COMPUTER ENGINEERING : TOWARD A CARING AND HUMANE TECHNOLOGY ; MAY 4TH TO 7TH 2003, MONTRÉAL, CANADA, IEEE, NEW YORK, NY, US, PAGE(S) 1775 - 1778, XP010654071, ISBN: 978-0-7803-7781-3 * the whole document *

## Description

### Technical Field

The present invention relates to the field of the video monitoring technique, and in particular, to a method and a system for implementing video monitoring by a mobile terminal based on convergence of a fixed network and a mobile network. Related technologies are known from CN-A-101547343 and ROY S ET AL: "A system architecture for managing mobile streaming media services", Multimedia Signal Processing, 2002 IEEE Workshop, pages 408-413, IEEE, 19 May 2003.

### Background of the Related Art

In recently years, the Internet Protocol (IP) technique has become a common network feature of various telecommunication networks, and the convergence of the fixed network and the mobile network has also become an obvious service feature of the new service experience. The development of the video monitoring of the fixed network has become relatively mature and the video monitoring of the fixed network is applied widely. The mobile video monitoring service refers to a fully digitalized mobile packet data service that the user directly accesses the public/wireless networks such as the PSTN/2.5G/2.75G/3G/4G and so on by various mobile or wired terminals (such as the stream media mobile phone, the Personal Digital Assistant (PDA), and PC and so on) and then can perform the video monitoring in real time on the places or regions which the user concerns or pay attention to, and it mainly serves for the region where the fixed network cannot cover and a plurality of services have a mobile requirement for terminals.

As for current mobile network, although the new generation mobile network techniques, such as 3G/4G and so on have been implemented, their bandwidths are still smaller than the bandwidth of the fixed network. As for the typical video code streams that are relatively easily implemented in the fixed network, for example, 512Kbps or CIF, the mobile network is further required to accept the video code streams by reducing the code rate and the resolution factor. In order to make the terminal of the mobile network to be able to directly monitor the video information monitored by the devices in the fixed network, a media transcoding device is required to be added between the fixed network and the mobile network to implement to transform the media code stream with a high code rate and a high resolution factor into a media code stream with a low code rate and a low resolution factor that can be accepted by the mobile network. However, since there are relatively more mobile network networks currently, such as GPRS/TD-SCDMA/CDMA 1X/WCDMA/WIFI and so on, and the network bandwidths of various network standards that can access the network are different, for example, the bandwidths of a plurality of network standards are higher, and the others are lower, how to provide different media code stream transform supports for the mobile terminal of different network standards by the media transcoding device is a technical problem that should be solved currently. Besides, since the current mobile users does not know the network bandwidths conditions used by themselves clearly, or may not know a plurality of technical concepts about resolution factor, code rate, and coding format and so on, how to automatically adapt to the bandwidths of different network standards and transform and obtain a code stream complying with the network standard by the media transcoding device is also a problem that requires solving in the case that the mobile user does not provide related parameters such as the resolution factor and the code rate and so on.

### Summary of the Invention

The technical problem to be solved is to provide a method and a system for implementing video monitoring by a mobile terminal, which extends the video monitoring in the fixed network to the mobile video monitoring, thereby implementing that the client of various different standards in the mobile network can watch the video information at the monitoring point anytime in any place.

The method and system according to the present invention are defined in the independent claims. Further improvements and embodiments are provided in the dependent claims.

Compared with the related art, the method and system of the present document has following beneficial technical effects: the mobile clients of various mobile network standards performing on-demand of the monitoring front end of the fixed network can be supported, and the video monitoring of the fixed network is extended to the mobile video monitoring, which complies with the trend of the convergence of the fixed network and the mobile network and satisfies the urgent requirement of developing the multimedia service based on the convergence of the fixed network and the mobile network of the integrated telecommunication operator. The mobile client of various network standards can watch the video information at the monitoring point anytime in any place.

### Brief Description of Drawings

FIG. 1 is a schematic diagram of the structure of the system for supporting the mobile terminals of various standards to implement the video monitoring and networking thereof according to the embodiment of the present invention;
FIG. 2 is a flow chart of the method for supporting the mobile terminals of various standards to implement the video monitoring according to the embodiment of the present invention;
FIG. 3 is a flow chart of the video on-demand when the mobile stream media server provided in the embodiment of the present invention exists; and
FIG. 4 is a flow chart of the video on-demand when the mobile stream media server provided in the embodiment of the present invention does not exist.

### Preferred Embodiments of the Present Invention

Below it will describe the present invention in detail with reference to the figures and preferred embodiments.

In the present invention, the video transcoding parameters of different mobile network standards through the media transcoding device is configured, and according to the video monitoring request of the mobile client, the media code stream of the monitoring front end is queried from the fixed network stream media server, and transcoding is performed according to the network standard of the mobile client and a media stream complying with the standard of the client network is output, which enable the mobile client to monitor the video information of different monitoring points anytime in any place.

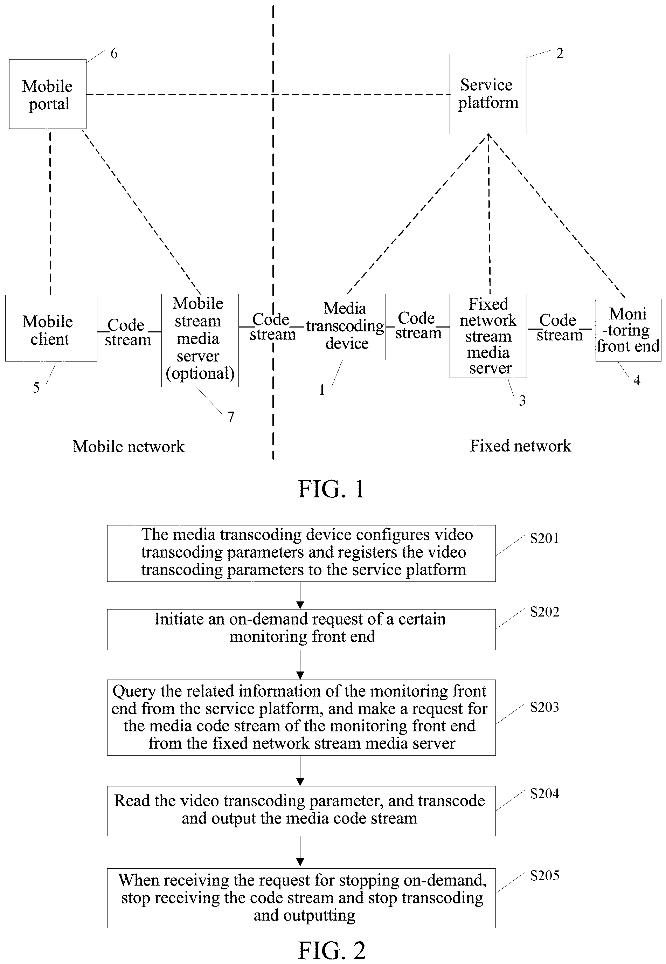

As shown in FIG. 1, the system for supporting the mobile terminals of various standards to implement video monitoring according to the present invention comprise a media transcoding device 1, a service platform 2, a fixed network stream media server 3, a monitoring front end 4, a mobile client 5, a mobile portal 6, and a mobile stream media server 7.

The media transcoding device 1, acting as a server of the mobile client, is configured to: process a on-demand request of the video monitoring of the mobile client 5, query the related information of the monitoring front end 4 from the service platform 2, request a media code stream of the monitoring front end 4 from the fixed network stream media server 3 and perform media transcoding on the received media code stream to send to the mobile client 5.

The service platform 2 is configured to: register and manage the information of the media transcoding device 1, monitoring front end 4, fixed network stream media server 3 or the fixed network client.

The fixed network stream media server 3 is configured to: request the media code stream from the monitoring front end 4, receive the media code stream of the monitoring front end 4, and forward the media code stream to the media transcoding device 1 or the fixed network client; or the fixed network stream media server 3 also can store the media code stream as needed.

The monitoring front end 4, which can have a build-in camera or externally connects a camera, is configured to: code the video data input by the camera to send to the fixed network stream media server 3. The coding format supported by the monitoring front end 4 can be H.264 or relatively common coding format such as MPEG4 and so on. The monitoring front end 4 can connect a plurality of cameras that are placed in different places for monitoring a plurality of monitoring points.

The mobile client 5 is configured to: initiate the on-demand request of the video monitoring, receive the media stream responded by the media transcoding device 1 or the mobile stream media server 7, and decode the media code stream so as to display the image. The mobile client 5 could be a mobile client such as a stream media mobile phone, the 3G network terminal, a PDA and so on.

The mobile portal 6 is configured to: obtain information such as ID and so on of various monitoring front ends from the service platform so that the mobile client perform query and login.

The mobile stream media server 7 is an optional device, which is configured to: distribute and store the transcoded media code stream output by the media transcoding device 1. If the number of mobile clients is relatively large and the number of mobile clients that make the on-demand of the same monitoring front end is relatively large, the mobile stream media server 6 can distribute the media code stream, so as to relieve the pressure of the media transcoding device 1.

FIG. 1 also shows the condition of the system networking according to the embodiment of the present invention. The location of the media transcoding device in the whole system and the flow direction of the media code stream can be seen from FIG. 1. As shown in FIG. 1, the service platform 2 respectively connects with the media transcoding device 1, the fixed network stream media server 3 and the monitoring front end 4, and thus the parameter information of different network standards, related information of the fixed network stream media server and all types of monitoring front ends can be registered to the service platform 2 through the network, or signaling interaction can be performed with the service platform as needed for reading information. The media transcoding device 1 and monitoring front end 4 are connected through the fixed network stream media server 3 to form a mobile channel of the media code stream. The mobile portal 6 can obtain the information such as the monitoring front end list and so on from the service platform 2, and the mobile client 5 and the mobile stream media server 7 can perform signaling interaction with the mobile portal 6 to enable the mobile client 5 to obtain the monitoring front end list as the on-demand data source. The monitoring front end 4 sends the media code stream to its connected fixed network stream media server 3 after receiving the on-demand request. The media transcoding device 1 obtains the media code stream from the fixed network stream media server 3, and then performs the transcoding based on the requirements and outputs the media code stream to the mobile client 5, or the mobile stream media server 7 forwards the media code stream to the mobile client 5.

FIG. 2 shows a procedure of the method for supporting the mobile terminals of various standards to implement the video monitoring according to the present invention. For facilitating description, only the parts related to the present invention are shown herein.

In step S201, the media transcoding device itself configures information used for interacting with the service platform, and then configures video transcoding parameters corresponding to various mobile network standards and registers the video transcoding parameters to the service platform. The video transcoding parameters include information such as the resolution factor, the code rate, coding format, and I frame period and so on.

At present, there are many types of mobile network standards in the market, such as GPRS/TD-SCDMA/CDMA 1X/EVDO/WCDMA/WIFI and so on. Different network standards have different resolution factors and code rates, but the mobile client can only accept the media code stream with a low code rate and low resolution factor, and therefore, the media transcoding device is required to transform the media code stream with a high code rate and high resolution factor of fixed network in accordance with the bandwidth condition of different network standards. For example, the WCDMA network is required to transform the code into H.264 with a resolution factor of QVGA and a code rate of 256Kbps; the EVDO network is required to transform the code into H.264 with a resolution factor of QCIF and a code rate of 128Kbps; these video transcoding parameters can be registered to a service platform through step S201, and provide a reference basis for the media transcoding device transforming the media code stream. The information for interacting with the service platform can be an IP address of the service platform, and the media transcoding device can sends a request to the service platform through this IP address to obtain the video parameter information of the mobile client or the related information of the monitoring front end and so on.

In step S202, the mobile client initiates an on-demand request of a certain monitoring front end directly or through the mobile stream media relay to the media transcoding device, and the request includes the ID of the monitoring front end and the network standard of the mobile client itself.

In the embodiment of the present invention, the on-demand request of a certain monitoring front end initiated by the mobile client should include the network standard of the mobile client itself, which is used for querying the video transcoding parameter corresponding to that network standard from the service platform. The network standard can be denoted by a digit, for example 1 is used to denote CDMA 1X, 2 denotes EVDO, 3 denotes WCDMA, and 4 denotes TD-SCDMA; it is easily understood that other digits or other symbols can also be used to denote the network standards included in the request. The request should also include the ID of the on-demand monitoring front end, which is used for querying the related information of the monitoring front end from the monitoring front end database of the service platform.

In step S203, the media transcoding device receives the request, and then queries the related information of the monitoring front end from the service platform, and makes a request for the media code stream of the monitoring front end to the fixed network stream media server.

The service platform stores the related information of the monitoring front end, including one or more of the ID of the monitoring front end, the channel number of the monitoring front end, and the address of the fixed network stream media server to which the monitoring front end belongs and so on. The media transcoding device can query the address of the fixed network stream media server to which the monitoring front end belongs according to the ID of the monitoring front end in the request. After obtaining the address of the fixed network stream media server, the media transcoding device makes a request for the media code stream of the monitoring front end to the fixed network stream media server through the address. After a series of RTSP protocol interaction, the fixed network stream media server sends the media code stream returned from the monitoring front end to the media transcoding device.

In step S204, the media transcoding device reads the video transcoding parameter of the network standard used by the mobile client after receiving the media code stream, and sends the media code stream to the mobile client or the mobile stream media server after performing transcoding.

Since the service platform stores the video transcoding parameters corresponding to various mobile network standards, the media transcoding device can query the video transcoding parameter corresponding to the network standard in the service platform according to the network standard of the mobile client included in the request of step S202, and then the trancoding operation complying with the mobile client is executed to the media code stream according to the video transcoding parameter to enable the mobile client to perform decoding and restoring according to own configuration after receiving the transcoded code stream.

In step S205, when receiving the request for stopping on-demand, the media transcoding device stops receiving the code stream from the fixed network stream media server and stops transcoding and outputting.

When the mobile client does not want to watch the monitoring video, the mobile client initiates the request for stopping on-demand directly or through the mobile stream media server to media transcoding device. The request for stopping on-demand includes the ID of the monitoring front end that is required to be stopped and the network standard of the mobile client itself. Upon receiving the request for stopping on-demand, the media transcoding device performs link disconnection operation with the fixed network stream media server, and the link is disconnected after completing a series of RTSP protocol interaction. At the same time, the media transcoding device responds to the remote mobile stream media server or the mobile client, and so far, the mobile client stops the monitoring video on-demand of the monitoring front end.

In the method of the present invention, the mobile client can obtain the information such as the monitoring front end list and so on from the service platform through the mobile portal, so as to be able to freely select a certain monitoring front end that requires monitoring for video on-demand to achieve the purpose of monitoring. The on-demand request initiated by the mobile client of the present invention can be forwarded by the mobile stream media server, or is directly sent to the media transcoding device by the mobile client instead of being forwarded by the mobile stream media server. The mobile stream media server is an optional device, and the procedures of video on-demand of the mobile client will be respectively described in detail below in the cases that the mobile stream media server exists and does not exist.

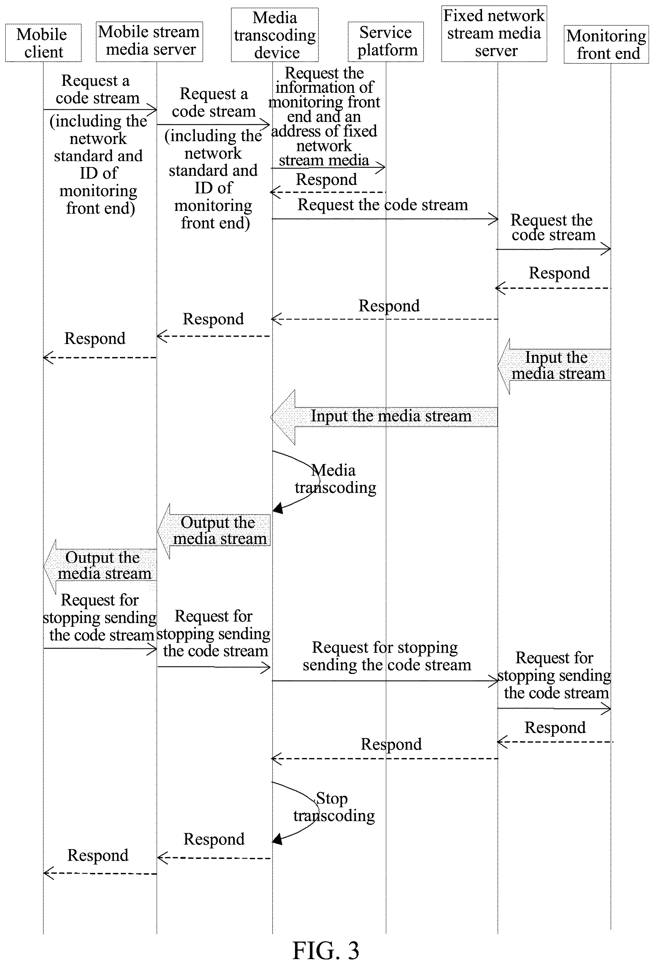

In the case that the mobile stream media server exists as shown in FIG. 3, the mobile client select the monitoring front end for on-demand that the mobile client wants to watch, and includes the ID of the monitoring front end and the network standard of the monitoring front end itself, and at this point, the mobile client makes a request for sending code stream to the mobile stream media server. The mobile stream media server judges whether a link with the media transcoding device has been established or not after receiving the request, and if not, the mobile stream media server initiates a request to the mobile transcoding device. An example of the request is as follows:
rtsp://172.16.162.38/service?PUID-ChannelNo=320101000200000001-1&PlayMethod=0 &StreamingType=1

The process of requesting communication according to the embodiment of the present invention uses the currently universal RSTP protocol, the PUID-ChannelNO field of the request example denotes the ID of the monitoring front end and this channel number, the StreamingType field denotes the network standard of the mobile client. The above example denotes that on-demand media code stream is the media code stream of the first channel of the monitoring front end with 320101000200000001; since this embodiment uses the digit 1 to denote CDMA 1X, 2 denotes EVDO, 3 denotes WCDMA, and 4 denotes TD-SCDMA, the StreamingType=1 of the above request example denotes that the network standard of the mobile client itself is CDMA 1X.

The media transcoding device queries the information of the on-demand monitoring front end from the service platform after receiving the request, such as querying the address information of the fixed network stream media server to which the monitoring front end belongs. The service platform receives the request for querying the information of the monitoring front end, and then responds and returns the address information of the fixed network stream media server to the media transcoding device. The media transcoding device requests the media code stream from the fixed network stream media server, and after a series of RTSP protocol interaction, the media transcoding device receives the media code stream sent from the fixed network stream media server.

At this point, the media transcoding device gets to know that the mobile client needs the media code stream of the network standard of the CDMA 1X according to the previous StreamingType, and queries the video transcoding parameter corresponding to the CDMA 1X from the service platform, and performs operations such as coding, decoding and so on for the received media code stream; for example, if it is queried the media code stream with the network standard of CDMA 1X requires to be transcoded into an I frame with a media format of H.264, a code rate of 64Kbps, a resolution factor of QCIF, and an I frame period of 2s, then the media transcoding device performs a series of operations including decoding, compressing, coding, and packaging and so on according to this parameter information, and then sends the processed media code stream to the mobile stream media server.

The mobile stream media server is then responsible for distributing the media code stream to the mobile client. The mobile client receives the media code stream, and then performs decoding and restoring and displays the image, thereby implementing to watch the video information of the monitoring point where the monitoring front end is located on the mobile client.

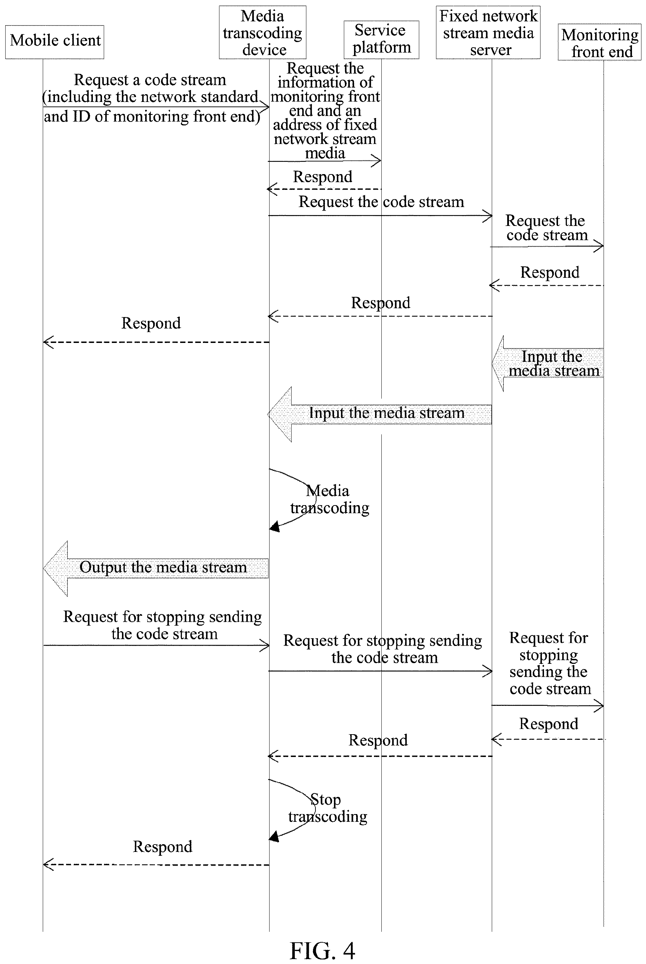

As shown in FIG. 4, in the case that mobile stream media server does not exist, the mobile client directly sends an on-demand request for a certain monitoring front end to the media transcoding device, and the request includes the ID of the monitoring front end and the network standard of the mobile client itself. The processing procedure of the media transcoding device requesting the code stream and transcoding the media stream after receiving the request is the same as the processing procedure shown in FIG. 3. When the mobile stream media server does not exist, the media transcoding device performs a series of operations of decoding, compressing, coding and packaging on the media code stream according to the video transcoding parameter, and then directly sends the media code stream to the mobile client.

As shown in FIG. 3 and FIG. 4, when the mobile client does not want to watch, the mobile client initiates a request for stopping transmitting the code stream directly or through the mobile stream media server to media transcoding device. The media transcoding device receives the request and then forwards the request to the fixed network stream media server. Then, the fixed network stream media server forwards the request to the monitoring front end. The monitoring front end responds and then stops transcoding the video code stream. The media transcoding device removes the originally established link, and responds to the remote mobile stream media server or the mobile client at the same time. So far, the mobile client stops the on-demand.

In summary, the method for supporting mobile terminals of various standards to implement video monitoring provided in the present invention can support various mobile network standards, and the mobile clients use the advantages of the mobile network to be able to conveniently perform the on-demand of the media information of the video monitoring point anytime in any places, and the video monitoring is no longer limited to a certain fixed place or fixed network, which satisfies the requirements of free monitoring of the user in different places.

Finally, it should be noted that the above embodiments are only used for describing the technical scheme of the present invention instead of limiting. Although the present invention is described in detail with reference to preferred embodiments, the person having ordinary skill in the art should understand that modifications, variations or equivalent substitutions can be made. The invention is defined in the appended claims.

### Industrial Applicability

The method for implementing video monitoring by a mobile terminal provided in the present invention can support various mobile network standards, and the mobile clients use the advantages of the mobile network to be able to conveniently perform the on-demand of the media information of the video monitoring point anytime in any places, and the video monitoring is no longer limited to a certain fixed place or fixed network, which satisfies the requirements of free monitoring of the user in different places.

## Claims

1. A method for implementing video monitoring by a mobile terminal, comprising the steps of:
i, a mobile client sending a request for a media stream available at a monitoring front end to a media transcoding device, said request including an identity (ID) of said monitoring front end and the network standard of said mobile client, and said monitoring front end being connected to a camera or having a build-in camera;
ii, the media transcoding device receiving said request, querying information of said monitoring front end from a service platform using said identity, requesting a media code stream of said monitoring front end from a fixed network stream media server connected to said monitoring front end, receiving said media code stream from said fixed network stream media server, transcoding the received media code stream into a transcoded media stream according to a video transcoding parameter corresponding to the network standard of said mobile client, said video transcoding parameter having been queried from said service platform, video transcoding parameters corresponding to respective mobile network standards being registered at said service platform; and
iii, the media transcoding device outputting the transcoded media code stream to the mobile client or a mobile stream media server connected to said mobile client;
thereby implementing video monitoring by mobile terminals of various network standards.

2. The method according to claim 1, further comprising:
when receiving a request for stopping, the media transcoding device stopping receiving the media code stream from the fixed network stream media server and stopping transcoding and outputting.

3. The method according to claim 1, wherein in step i, said mobile client relaying said request through the mobile stream media server.

4. The method according to claim 1 or 2 or 3, wherein the video transcoding parameters include a resolution factor, a coding rate, a coding format and an I frame period.

5. The method according to claim 1, whereby related information of said monitoring front end and said video transcoding parameters are stored at said service platform, wherein the related information of said monitoring front end includes one or more of ID of said monitoring front end, a channel number of said monitoring front end, and an address of a fixed network stream media server to which said monitoring front end belongs.

6. The method according to claim 1, wherein after the step of said media transcoding device receiving said request, the step ii further comprises:
said media transcoding device querying the address of the fixed network stream media server to which said monitoring front end belongs, and requesting the media code stream from the fixed network stream media server based on said address;
said fixed network stream media server requesting the media code stream from said monitoring front end, and sending the media code stream returned by said monitoring front end to said media transcoding device; and
said media transcoding device querying the video transcoding parameters corresponding to the network standard of said mobile client from the service platform, so as to transcode the received media code stream according to said video transcoding parameters.

7. A system for implementing video monitoring by a mobile terminal, comprising:
a media transcoding device (1), which is configured to: process a request for a media stream available at a monitoring front end by a mobile client (5), request a media code stream from a fixed network stream media server (3), and perform media transcoding of the media code stream received from said fixed network media server into a transcoded media stream according to a video transcoding parameter corresponding to the network standard of said mobile client, said video transcoding parameter having been queried from a service platform, video transcoding parameters corresponding to respective mobile network standards being registered at said service platform; the service platform (2), which is configured to: register and manage information of said media transcoding device (1), of a monitoring front end (4), and of the fixed network stream media server (3) wherein the information comprises the video transcoding parameters corresponding to respective mobile network standards;
the fixed network stream media server (3), which is configured to: request and receive the media code stream from said monitoring front end (4), and send the received media code stream to said media transcoding device;
the monitoring front end (4), which is configured to: code video data from a camera and respond to the request for sending the media code stream of said fixed network stream media server (3); and
the mobile client (5), which is configured to: send to the media transcoding device the request for a media stream available at the monitoring front end, receive the transcoded media stream sent as a reply by the media transcoding device (1) or by the media transcoding device (1) via a mobile stream media server (7), wherein said request includes an identity (ID) of said monitoring front end and the network standard of said mobile client;
wherein said service platform (2) respectively connects with said media transcoding device (1), said fixed network stream media server (3) and said monitoring front end (4), and said media transcoding device (1) further connects with said monitoring front end (4) through said fixed network stream media server (3) ;
thereby implementing video monitoring by mobile terminals of various network standards.

8. The system according to claim 7, further comprising:
a mobile portal (6), which is configured to: obtain information of various monitoring front ends from said service platform (2) so that said mobile client may query and login ; and
the mobile stream media server (7), which is configured to: distribute and store the media code stream transcoded and output by said media transcoding device (1).

9. The system according to claim 7 or 8, wherein said mobile client (5) is a stream media mobile phone, or a 3rd generation (3G) network terminal or a personal digital assistant (PDA).

## Patentansprüche

1. Verfahren zur Implementierung von Videoüberwachung mit einem mobilen Endgerät, umfassend die folgenden Schritte:
i, Senden einer Anforderung von einem mobilen Client nach einem Medienstrom, der an einem vorderen Überwachungsende verfügbar ist, an eine Medientranscodierungsvorrichtung, wobei die Anforderung eine Identität (ID) des vorderen Überwachungsendes und den Netzwerkstandard des mobilen Clients umfasst und wobei das vordere Überwachungsende mit einer Kamera verbunden ist oder eine eingebaute Kamera hat;
ii, Empfangen der Anforderung durch die Medientranscodierungsvorrichtung, Abfragen von Informationen des vorderen Überwachungsendes von einer Serviceplattform unter Verwendung der Identität, Anfordern eines Mediencodestroms des vorderen Überwachungsendes von einem festen Netzwerkstrom-Medienserver in Verbindung mit dem vorderen Überwachungsende, Empfangen des Mediencodestroms vom festen Netzwerkstrom-Medienserver, Transcodieren des empfangenen Mediencodestroms in einen transcodierten Medienstrom gemäß einem Videotranscodierungsparameter der dem Netzwerkstandard des mobilen Client entspricht, wobei der Videotranscodierungsparameter von der Serviceplattform angefordert wurde, wobei die Videotranscodierungsparameter mit entsprechenden mobilen Netzwerkstandards übereinstimmen, die in der Serviceplattform registriert sind; und
iii, Ausgeben durch die Medientranscodierungsvorrichtung des transcodierten Mediencodestroms an den mobilen Client oder einen mobilen Strommedienserver in Verbindung mit dem mobilen Client;
wodurch eine Videoüberwachung mit mobilen Endgeräten mit verschiedenen Netzwerkstandards implementiert wird.

2. Verfahren nach Anspruch 1, ferner umfassend:
wenn eine Anforderung für das Anhalten der Medientranscodierungsvorrichtung empfangen wird, Beenden des Empfangens des Mediencodestroms vom festen Netzwerkstrom-Medienserver und Anhalten des Transcodierens und Ausgebens.

3. Verfahren nach Anspruch 1, wobei beim Schritt i der mobile Client die Anforderung durch den mobilen Strommedienserver übermittelt.

4. Verfahren nach Anspruch 1 oder 2 oder 3, wobei die Videotranscodierungsparameter einen Auflösungsfaktor, eine Codierungsrate, ein Codierungsformat und eine I-Frame-Periode umfassen.

5. Verfahren nach Anspruch 1, wobei zugehörige Informationen des vorderen Überwachungsendes und die Videotranscodierungsparameter in der Serviceplattform gespeichert werden, wobei die zugehörigen Informationen des vorderen Überwachungsendes eines oder mehrere einer ID des vorderen Überwachungsendes, einer Kanalnummer des vorderen Überwachungsendes und einer Adresse eines festen Netzwerkstrom-Medienservers, zu dem das vordere Überwachungsende gehört, umfassen.

6. Verfahren nach Anspruch 1, wobei nach dem Schritt des Empfangens der Medientranscodierungsvorrichtung der Anforderung, der Schritt ii ferner Folgendes umfasst:
Anfordern durch die Medientranscodierungsvorrichtung der Adresse des festen Netzwerkstrom-Medienservers, zu dem das vordere Überwachungsende gehört, und Anfordern des Mediencodestroms vom festen Netzwerkstrom-Medienserver beruhend auf der Adresse;
Anfordern durch den festen Netzwerkstrom-Medienservers des Mediencodestroms vom vorderen Überwachungsende und Senden des vom vorderen Überwachungsende zurückgesendeten Mediencodestroms zur Medientranscodierungsvorrichtung; und
Abfrage durch die Medientranscodierungsvorrichtung der Videotranscodierungsparameter, die dem Netzwerkstandard des mobilen Clients entsprechen, von der Serviceplattform, um den empfangenen Mediencodestrom gemäß den Videotranscodierungsparametern zu transcodieren.

7. System für die Implementierung von Videoüberwachung mit einem mobilen Endgerät, umfassend:
eine Medientranscodierungsvorrichtung (1), die zu Folgendem konfiguriert ist:
Verarbeiten einer Anforderung für einen am vorderen Überwachungsende durch einen mobilen Client (5) verfügbaren Medienstrom, Anfordern eines Mediencodestroms von einem festen Netzwerkstrom-Medienserver (3) und Ausführen einer Medientranscodierung des vom festen Netzwerkmedienserver empfangenen Mediencodestroms in einen transcodierten Medienstrom gemäß eines Videotranscodierungsparameters, der dem Netzwerkstandard des mobilen Client entspricht, wobei der Videotranscodierungsparameter von einer Serviceplattform abgefragt wurde, wobei die Videotranscodierungsparameter entsprechenden mobilen Netzwerkstandards entsprechen, die in der Serviceplattform registriert sind;
die Serviceplattform, die zu Folgendem konfiguriert ist: Registrieren und Verwalten von Informationen der Medientranscodierungsvorrichtung (1) eines vorderen Überwachungsendes (4) und des festen Netzwerkstrom-Medienservers, wobei die Informationen die Videotranscodierungsparameter umfassen, die den entsprechenden mobilen Netzwerkstandards entsprechen;
den festen Netzwerkstrom-Medienserver (3), der zu Folgendem konfiguriert ist: Anfordern und Empfangen des Mediencodestroms vom vorderen Überwachungsende (4) und Senden des empfangenen Mediencodestroms zur Medientranscodierungsvorrichtung;
das vordere Überwachungsende (4), das zu Folgendem konfiguriert ist: Codieren von Videodaten von einer Kamera und Antworten auf die Anforderung zum Senden des Mediencodestroms des festen Netzwerkstrom-Medienservers (3); und
den mobilen Client (5), der zu Folgendem konfiguriert ist: Senden an die Medientranscodierungsvorrichtung der Anforderung für einen am vorderen Überwachungsende verfügbaren Medienstrom, Empfangen des transcodierten Medienstroms, gesendet als eine Antwort von der Medientranscodierungsvorrichtung (1) oder von der Medientranscodierungsvorrichtung (1) über einen mobilen Strommedienserver (7), wobei die Anforderung eine Identität (ID) des vorderen Überwachungsendes und den Netzwerkstandard des mobilen Client umfasst;
wobei die Serviceplattform (2) sich jeweils mit der Medientranscodierungsvorrichtung (1), dem festen Netzwerkstrom-Medienserver (3) und dem vorderen Überwachungsende verbindet, und sich die Medientranscodierungsvorrichtung ferner über den festen Netzwerkstrom-Medienserver (3) mit dem vorderen Überwachungsende (4) verbindet;
wodurch eine Videoüberwachung mit mobilen Endgeräten mit verschiedenen Netzwerkestandards implementiert wird.

8. System nach Anspruch 7, ferner umfassend:
ein mobiles Portal (6), das zu Folgendem konfiguriert ist: Erhalten von Informationen von verschiedenen vorderen Überwachungsenden von der Serviceplattform (2), sodass der mobile Client abfragen und sich einloggen kann; und
den mobilen Strommedienserver (7), der zu Folgendem konfiguriert ist: Verteilen und Speichern des Mediencodestroms, der von der Medientranscodierungsvorrichtung (1) transcodiert und ausgegeben wird.

9. System nach Anspruch 7 oder 8, wobei der mobile Client (5) ein Strommedienmobiltelefon oder ein Netzwerkendgerät der dritten Generation (3G) oder ein persönlicher digitaler Assistent (PDA) ist.

## Revendications

1. Procédé de mise en oeuvre d'une surveillance vidéo par un terminal mobile, comprenant les étapes suivantes :
i, l'envoi à un dispositif de transcodage multimédia par un client mobile d'une demande de flux multimédia disponible au niveau d'une extrémité frontale de surveillance, ladite demande comprenant une identité (ID) de ladite extrémité frontale de surveillance et la norme de réseau dudit client mobile, et ladite extrémité frontale de surveillance étant connectée à une caméra ou ayant une caméra intégrée ;
ii, la réception par le dispositif de transcodage multimédia de ladite demande, la demande d'informations sur ladite extrémité frontale de surveillance à une plateforme de service à l'aide de ladite identité, la demande d'un flux de code multimédia de ladite extrémité frontale de surveillance à un serveur multimédia de flux de réseau fixe connecté à ladite extrémité frontale de surveillance, la réception dudit flux de code multimédia en provenance dudit serveur multimédia de flux de réseau fixe, le transcodage du flux de code multimédia reçu en un flux multimédia transcodé conformément à un paramètre de transcodage vidéo correspondant à la norme de réseau dudit client mobile, ledit paramètre de transcodage vidéo ayant été demandé à ladite plateforme de service, les paramètres de transcodage vidéo correspondant aux normes respectives de réseau mobile enregistrées au niveau de ladite plateforme de service ; et
iii, la production en sortie par le dispositif de transcodage multimédia du flux de code multimédia transcodé au client mobile ou à un serveur multimédia de flux mobile connecté audit client mobile ;
et ainsi la mise en oeuvre de la surveillance vidéo par des terminaux mobiles de différentes normes de réseau.

2. Procédé selon la revendication 1, comprenant en outre :
lors de la réception d'une demande d'arrêt, l'arrêt par le dispositif de transcodage multimédia de la réception du flux de code multimédia en provenance du serveur multimédia de flux de réseau fixe et l'arrêt du transcodage et de la production en sortie.

3. Procédé selon la revendication 1, dans lequel dans l'étape i, ledit client mobile relaie ladite demande via le serveur multimédia de flux mobile.

4. Procédé selon la revendication 1 ou 2 ou 3, dans lequel les paramètres de transcodage vidéo comprennent un facteur de résolution, une vitesse de codage, un format de codage et une période de trame I.

5. Procédé selon la revendication 1, par lequel des informations associées de ladite extrémité frontale de surveillance et desdits paramètres de transcodage vidéo sont stockées au niveau de ladite plateforme de service, les informations associées de ladite extrémité frontale de surveillance comprenant au moins l'un d'une ID de ladite extrémité frontale de surveillance, d'un numéro de canal de ladite extrémité frontale de surveillance et d'une adresse d'un serveur multimédia de flux de réseau fixe auquel ladite extrémité frontale de surveillance appartient.

6. Procédé selon la revendication 1, dans lequel après l'étape de réception par ledit dispositif de transcodage multimédia de ladite demande, l'étape ii comprend en outre :
la demande par ledit dispositif de transcodage multimédia de l'adresse du serveur multimédia de flux de réseau fixe auquel ladite extrémité frontale de surveillance appartient et la demande du flux de code multimédia au serveur multimédia de flux de réseau fixe en fonction de ladite adresse ;
la demande par ledit serveur multimédia de flux de réseau fixe du flux de code multimédia à ladite extrémité frontale de surveillance et l'envoi du flux de code multimédia renvoyé par ladite extrémité frontale de surveillance audit dispositif de transcodage multimédia ; et
la demande par ledit dispositif de transcodage multimédia des paramètres de transcodage vidéo correspondant à la norme de réseau dudit client mobile à la plateforme de service, de manière à transcoder le flux de code multimédia reçu conformément auxdits paramètres de transcodage vidéo.

7. Système de mise en oeuvre d'une surveillance vidéo par un terminal mobile, comprenant :
un dispositif de transcodage multimédia (1), qui est conçu pour : traiter une demande de la part d'un client mobile (5) d'un flux multimédia disponible au niveau d'une extrémité frontale de surveillance, demander un flux de code multimédia à un serveur multimédia de flux de réseau fixe (3) et réaliser un transcodage multimédia du flux de code multimédia reçu en provenance dudit serveur multimédia de réseau fixe en un flux multimédia transcodé conformément à un paramètre de transcodage vidéo correspondant à la norme de réseau dudit client mobile, ledit paramètre de transcodage vidéo ayant été demandé à une plateforme de service, des paramètres de transcodage vidéo correspondant à des normes respectives de réseau mobile enregistrées au niveau de ladite plateforme de service ;
la plateforme de service (2) qui est conçue pour : enregistrer et gérer des informations dudit dispositif de transcodage multimédia (1), d'une extrémité frontale de surveillance (4) et du serveur multimédia de flux de réseau fixe (3), les informations comprenant les paramètres de transcodage vidéo correspondant aux normes respectives de réseau mobile ;
le serveur multimédia de flux de réseau fixe (3), qui est conçu pour : demander et recevoir le flux de code multimédia de ladite extrémité frontale de surveillance (4), et envoyer le flux de code multimédia reçu audit dispositif de transcodage multimédia ;
l'extrémité frontale de surveillance (4), qui est conçue pour : coder des données vidéo en provenance d'une caméra et répondre à la demande d'envoi du flux de code multimédia dudit serveur multimédia de flux de réseau fixe (3) ; et
le client mobile (5), qui est conçu pour : envoyer au dispositif de transcodage multimédia la demande d'un flux multimédia disponible au niveau de l'extrémité frontale de surveillance, recevoir le flux multimédia transcodé envoyé comme réponse par le dispositif de transcodage multimédia (1) ou par le dispositif de transcodage multimédia (1) via un serveur multimédia de flux mobile (7), ladite demande comprenant une identité (ID) de ladite extrémité frontale de surveillance et la norme de réseau dudit client mobile ;
ladite plateforme de service (2) se connectant respectivement audit dispositif de transcodage multimédia (1), audit serveur multimédia de flux de réseau fixe (3) et à ladite extrémité frontale de surveillance (4), et ledit dispositif de transcodage multimédia se connectant en outre à ladite extrémité frontale de surveillance (4) par ledit serveur multimédia de flux de réseau fixe (3) ;
mettant ainsi en oeuvre la surveillance vidéo par des terminaux mobiles de différentes normes de réseau.

8. Système selon la revendication 7, comprenant en outre :
un portail mobile (6), qui est conçu pour : obtenir des informations de différentes extrémités frontales de surveillance en provenance de ladite plateforme de service (2) de manière à ce que ledit client mobile puisse formuler des demandes et se connecter ; et
le serveur multimédia de flux mobile (7), qui est conçu pour : distribuer et stocker le flux de code multimédia transcodé et produit en sortie par ledit dispositif de transcodage multimédia (1).

9. Système selon la revendication 7 ou 8, dans lequel ledit client mobile (5) est un téléphone mobile multimédia de flux ou un terminal de réseau de 3^{ème} génération (3G) ou un assistant numérique personnel (PDA).
